# NEW EUROPEAN PATENT SPECIFICATION

(11) **EP 0 990 401 B2**
(45) Date of publication and mention of the opposition decision: **31.05.2006**
(45) Mention of the grant of the patent: 09.07.2003
(21) Application number: 99204325.7
(22) Date of filing: 22.08.1996
(51) Int. Cl.: A46B 7/06

(54) **Toothbrush**
Zahnbürste
Brosse à dents

(30) Priority: 25.08.1995 GB 9517450
(43) Date of publication of application: 05.04.2000
(62) Divisional of application: 96930087.0
(73) Proprietor: SmithKline Beecham Consumer Healthcare GmbH, 77815 Bühl (Baden) (DE)
(72) Inventor: Halm, Hans, 44628 Herne (DE); Kramer, Hans, Smithkline Beechem Cons. Healthcare, 77815 Buhl (Baden) (DE)
(74) Representative: Walker, Ralph Francis

(56) References cited:
- WO-A-84/05183
- WO-A-92/17092
- WO-A-92/17093
- WO-A-96/02165
- WO-A-97/24048
- DE-U- 9 402 125
- FR-A- 707 727
- US-A- 1 927 365
- US-A- 2 266 195
- US-A- 5 373 602

## Description

This invention relates to toothbrushes, in particular to toothbrushes having a flexibly linked region in their head.

Toothbrushes having a flexibly linked region in their head are known. For example WO 92/17093 discloses a toothbrush in which the head is divided into two or more segments which are flexibly and resiliently linked to each other and/or to the handle of the toothbrush. A particular form of the toothbrush of WO 92/17093 has a head which has grooves in the reverse face of the head from which the bristles extend, these grooves being filled with an elastomeric material to modulate the flexibility. The embodiments disclosed in have their grooves distributed in a generally uniform distribution over the reverse face of the head, or around the longitudinal mid point of the head, so as to enable the whole head to accommodate itself to the curved shape of the teeth. WO 96/02165 discloses toothbrushes with flexible heads similar in construction to those of WO 92/17093, and having a generally concave profile of bristle ends. DE-G 87 05 474.4 discloses a toothbrush in which the tip region of the head is hinged to a base region of the head and an operating button on the handle allows the tip region to fold relative to the base region.

it is an object of this invention to provide a toothbrush in which the flexibility of the head is concentrated in the tip of the head remote from the handle, so as to improve the ability of the toothbrush to clean surfaces of the teeth which face the back of the mouth.

According to this invention a toothbrush is provided according to claim 1.

The above-described construction of toothbrush concentrates flexibility of the head at the tip end of the toothbrush, the linking of the tip segment and base segment is preferably in a manner which enables the tip segment to fold or pivot resiliently relative to the base segment during toothbrushing. The link provided at the link between the tip segment and the base segment allows the tip segment to fold or pivot during use about a fold or pivot axis which is in the plane of the bristle face and generally transverse to the longitudinal toothbrush axis such that bristles on the tip segment can lean backwards, i.e so that the free ends of bristles in the tip segment swing toward the handle, assisting the bristles to clean surfaces of the teeth which face the back of the mouth. The flexible linking also helps to prevent excessive brushing pressure from being applied during toothbrushing.

Normally the head of the toothbrush will adjoin the handle of the toothbrush via a neck region between the base of the toothbrush head and the part of the handle which is held during use.

The base segment is substantially rigid, that is, during the operation of brushing the teeth the base segment does not significantly flex beyond the usual limits of flexing of a plastics material toothbrush head.

The base segment extends for at least 60%, for example at least 75% of the distance between the base end of the head and the tip of the head

**T**he tip segment is also substantially rigid, so that the tip segment does not itself significantly flex apart from its folding or pivoting relative to the base segment. The tip segment may be of a variety of shapes accommodated to the shape of the tip of the head, e.g. circular, triangular (including ogival), rectangular, elongate, lozenge shape etc.

In its non-stressed condition, i.e when not being used, the bristle face of the tip segment and base segment of the toothbrush of this invention may be substantially coplanar, i.e with a substantially 180° angle between them. In a preferred embodiment of the toothbrush of this invention the bristle face of the tip segment forms an angle of less than 180° with the bristle face of the base segment, e.g 150°-179°, suitably 155°-170°. A suitable angle is one in which the free ends of the bristles on the handle side of the tip segment are in close proximity to, e.g touching, the free ends of bristles on the tip side of the base segment.

The link between the segments comprises an aperture, space or chasm in the head material between the segments which is bridged solely by means of a complete or partial filling of an elastomeric material. In this construction the head can be effectively in two segments with a gap between them containing the elastomer. This elastomeric material is preferably bonded to the segments on opposite sides of the aperture, space or chasm so as to hold the segments together.

The above-mentioned aperture comprises a slot, chasm or cut out across the width of the head. Such an aperture is open at the bristle face of the head and at the opposite face of the head, and passes completely through the head. Such aperture, may be of various shapes, for example widthways slots. These may in plan be substantially straight aligned widthways, curved or angular, e.g. generally "C", "U" or "V" shaped. In such a construction the convex bulge of the"U" or "C" or the apex of the "V" may point either toward the handle or toward the tip of the head away from the handle. Alternatively such aperture, may be narrow at the edges of the head and widen toward the centre of the head or vice versa.

The aperture, extends widthways to the sides of the toothbrush head, and elastomeric material therein may be extended around the tip segment of the head and/or around the base segment of the head to form an elastomeric buffer around the toothbrush h ead to soften any impact of the toothbrush head with the gums of the user, and also to gently massage the gums. Alternatively elastomeric material may be provided around the tip segment of the head to form an elastomeric buffer in a known manner e.g. as in FR 442832 and DE 36 28 722.

The aperture, contains an elastomeric material the outer surface of this elastomeric material which may have a corrugated surface, which may further help to control the flexibility of the link region.

In one embodiment of the toothbrush of this invention, the head is constructed such that the tip segment may fold backwards resiliently relative to the base segment, during toothbrushing, about a widthways oriented fold axis that crosses the head in the link region. The fold axis may cross the head in or on the edge of an aperture, as described above. In such a construction, the aperture, may be shaped such that the widthways oriented fold axis crosses the head of the toothbruch entirely within the aperture,

Such a construction can cause the entire tip segment to fold in the bristle direction away from the plane which lies between the bristle face and the opposite face of the head, so that the tip segment in effect folds backwards towards the base region during use in toothbrushing. This folding can facilitate tooth cleaning, for example enabling the toothbrush head to accommodate itself better to the curved shape of the row of the teeth.

In an alternative embodiment of the toothbrush of this invention, the tip segment and /or link may be constructed and positioned such that the tip segment can pivot resiliently relative to the base region during toothbrushing, about a widthways oriented pivot axis that crosses the tip segment intermediate between its tip end and its base end.

Such a construction causes pivoting of the tip segment about this axis intermediate along its length, i. e. causes the tip segment to have a "see-saw" action in which during toothbrushing part of the tip segment toward the tip of the head pivots in the bristle direction away from the plane which lies between the bristle face and the opposite face of the head, and the part of the tip segment toward the base segment of the head pivots in a direction opposite to the bristle direction away from the plane which lies between the bristle face and the opposite face of the head, or *vice versa.*

In this embodiment such pivoting may for example be achieved in a construction of head in which the tip end of the base segment is in the form of two limbs which partly surround a part of the tip segment which extends in the base direction between them, with the link between the tip segment and the base segment. For example the tip end of the base segment may be made in the shape of a two pronged fork-like frame, with a part of the tip segment between the two prongs of the fork, and a link between the tip segment and base segment.

In an alternative construction of the head of this embodiment the base end of the tip segment may be in the form of two limbs which partly surround a part of the base segment which extends in the tip direction between them, with the link between the tip segment and the base segment. For example the base end of the tip segment may be made in the shape of a two pronged fork-like frame, with a part of the base segment between the two prongs of the fork, and a link between the tip segment and base segment.

For example the tip region may be made generally "C", "U" or "V" shaped with its limbs toward the base region, or "Y" shaped with the upper limbs of the Y towards the base region. The part of the base region which extends in the tip direction may lie between the said limbs.

The elastomeric material may be an elastomeric material as commonly used in two-component toofhbrusfies, e.g. that described in EP 0336E41, which can be bonded to plastics materials used for toothbrush handle manufacture. Such an elastomeric material can be injected into the toothbrush mould shortly after injection moulding of the plastics material parts of the toothbrush so that the hot plastics material fuses and bonds with the elastomeric material. This is a generally known process,

In the base segment the bristles may be disposed in discrete generally circular section tufts in patterns which are generally known in the field of toothbrushes, for example in longitudinal or widthways rows at a generally conventional spacing. If fused in, the bristles may additionally or alternatively be disposed in "mats" of a cross section which may be circular or other than circular.

In the tip segment the bristles may be disposed in discrete generally circular section tufts, or if fused in, the bristles may additionally or alternatively be disposed in "mats" of a cross section which may be circular or other than circular. In a tip segment it is preferred to dispose the bristle tufts in either (I) a pattern of discrete tufts arranged in a generally circular or polygonal pattern, or (ii) a single tuft of generally rounded cross section perpendicular to the bristle face, or (iii) a tuft of generally "C" or "U" shaped cross section perpendicular to the bristle face having at least one of the limbs of the "C" or "U" aligned generally parallel to the longitudinal toothbrush axis and with the rounded bend of the "C" or "U" facing the end of the bristle face remote from the handle.

The ends of the bristles remote from the bristle face may be substantially coplanar. Alternatively the ends may undulate about a plane to accommodate the ends of the bristles to the undulating profile of the teeth or to lie in a "battlemented" shape to help clean the interdental spaces. Such undulating surface bristles are known. Additionally or alternately the ends of the bristles remote from the bristle face on a tip segment may lie in a different plane to the ends of the bristles remote from the bristle face on a base segment of the head. For example the plane of the said ends on the tip segment may slope upwards away from the bristle face in the direction away from the handle. This may for example be achieved in the preferred embodiment of the toothbrush of the invention in which the bristle face of a tip segment forms an angle of less than 180° with the bristle face of the base segment.

The handle may be of generally conventional construction, and may for example include a folded flexible region, and grip pads of elastomeric material, as exemplified in EP 0336641. Elastomeric grip pads may alternatively or additionally be located on other parts of the toothbrush handle as convenient.

The toothbrush of the invention may be made by generally conventional injection moulding techniques, for example in which a plastics material "skeleton" is first made by injection moulding, then elastomer parts if present, are introduced by a subsequent injection moulding step, in which the elastomer is injected as a hot fluid and bonds to the plastics material. Such techniques, and suitable plastics materials and elastomer materials, are well known. The link includes an elastomer material which may be injected with the same injection step as is used to inject elastomer grip pads, and these various regions of elastomeric material may be connected by moulding channels in a known manner.

The bristles may also be of generally conventional construction and materials, and may be fastened into the bristle face by generally known techniques. For example small metal clips around the ends of bristles to be fixed into the head, which are then wedged Into sockets in the bristle face. Alternatively the bristles may be fused into the head material, again using known techniques.

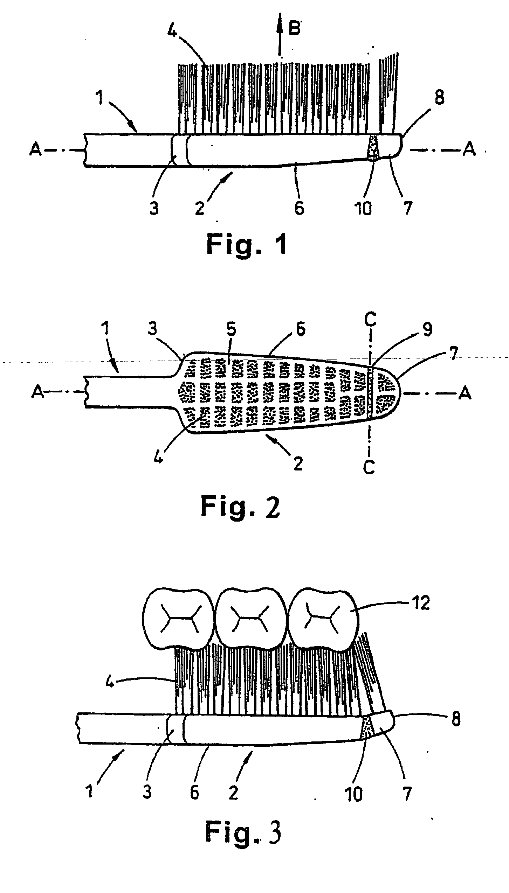

The invention will now be described by way of example only with reference to the accompanying figures in which Figs. 1 to 3 show plan are side views of a toothbrush head of the invention.

Referring to Figs. 1 to 3, a toothbrush in which a tip segment is constructed to fold resiliently relative to a base segment, during toothbrushing, about a widthways oriented fold axis that crosses the head at the edge of the tip region which faces the base region is shown.

This toothbrush comprises a handle 1 with a head 2 integrally adjoining the handle at a base end 3 of the head, the head 2 and handle 1 being disposed along a longitudinal toothbrush axis A-A, the head2 having bristles 4 extending from a bristle face 5 of the head 5 in a general bristle direction B.

The head 2 comprises two segments. A substantially rigid base segment 6 integral with the toothbrush handle 1 extends from the base end 3 of the head 2 to a distance in the longitudinal half of the head 2 furthest from the base 3 of the head. A tip segment 7 extends from the extreme tip 8 of the head 2 toward the base segment 6. Both the base segment 6 and tip segment 7 are bristle 4 bearing.

Bristles 4 are shown in the form of rectangular or polygonal "mats", but may edually well be round tufts. In the toothbrush of Figs. 1, 2 and 3 the aperture 9 extends all the way through the thickness of the head material. An elastomeric material 10 wholly fills the aperture 9 and is bonded to the opposite edges of the base region 6 and tip region 7 so as to hold the base segment 6 and tip segment 7 resiliently together. In Fig. 17 the tip segment 7 folds during toothbrushing to clean the rearward facing surfaces of teeth 12.

## Claims

1. A toothbrush which comprises a handle with a head, the head having a base end facing the handle and a tip end remote from the base end, the head adjoining the handle at the base end of the head, the head and handle being disposed along a longitudinal toothbrush axis, the head having bristles extending from a bristle face of the head, the head comprises a substantially rigid base segment adjoining the toothbrush handle and extending from the base end of the head to a link region situated between the base end and the tip end, and a substantially rigid extending from the tip end of the head to the link region, both the base segment and tip segment being bristle bearing, the tip segment being flexibly and resiliently linked at the link to the base segment, **characterised in that** the link comprises an aperture (9) between the tip and base segments (6,7) which extends the entire width of the toothbrush head (2) to the edge surfaces and which passes through the thickness of the head (2) for the whole length of the aperture (9), and which is open at the bristle face (5) and the opposite face, and which is bridged solely by means of an elastomer material (10), and the base segment extends for at least 60%, of the distance between the base end of the head and the tip of the head.

2. A toothbrush according to claim 1 ***characterised* in that** the aperture (9) is of a curved or angular generally "C", "U" or "V" shape in plan when viewed in a direction generally perpendicular to the bristle face (5) or the opposite face.

3. A toothbrush according 1 or 2 ***characterised* in that** the aperture (9) is narrow at the edges of the head (2) and widens toward the centre of the head (2) or vice versa.

4. A process for making a toothbrush as claimed in any one of claims 1 to 3, ***characterised* by** first making the plastics material parts of the toothbrush, comprising a pair of the longitudinally adjacent tip and base segments (6, 7), by means of an injection moulding process, then introducing elastomer material (10) between the segments (6,7) in a subsequent injection moulding step.

## Revendications

1. Brosse à dents qui comprend un manche avec une tête, la tête ayant une extrémité de base donnant sur le manche et une extrémité de bout éloignée de l'extrémité de base, la tête étant adjacente au manche au niveau de l'extrémité de base de la tête, la tête et le manche étant disposés le long d'un axe longitudinal de la brosse à dents, la tête ayant des poils s'étendant à partir d'une face à poils de la tête, la tête comprend un segment de base sensiblement rigide adjacent au manche de la brosse à dents et s'étendant depuis l'extrémité de base de la tête jusqu'à une région d'articulation située entre l'extrémité de base et l'extrémité de bout, et un segment de bout sensiblement rigide s'étendant depuis l'extrémité de bout de la tête jusqu'à la région d'articulation, à la fois le segment de base et le segment de bout étant porteurs de poils, le segment de bout étant articulé de manière souple et élastique au niveau de l'articulation par rapport au segment de base, **caractérisée en ce que** :
l'articulation comprend un jour (9) entre les segments de base et de bout (6, 7) qui s'étend sur la totalité de la largeur de la tête de brosse à dents (2) jusqu'aux surfaces de bord et qui traverse l'épaisseur de la tête (2) sur toute la longueur du jour (9) et qui est ouvert au niveau de la face à poils (5) et de la face opposée, et qui est relié uniquement au moyen d'un matériau élastomère (10), et le segment de base s'étend sur au moins 60 % de la distance entre l'extrémité de base de la tête et le bout de la tête.

2. Brosse à dents selon la revendication 1, **caractérisée en ce que** le jour (9) est d'une forme recourbée ou angulaire généralement en "C", "U", ou "V" en plan lorsqu'elle est vue dans une direction généralement perpendiculaire à la face à poils (5) ou à la face opposée.

3. Brosse à dents selon la revendication 1 ou 2, **caractérisée en ce que** le jour (9) est étroit au niveau des bords de la tête (2) et s'élargit vers le centre de la tête (2) ou vice versa.

4. Procédé pour fabriquer une brosse à dents selon l'une quelconque des revendications 1 à 3, **caractérisé par** la fabrication tout d'abord des parties en matière plastique de la brosse à dents, comprenant une paire des segments de base et de bout longitudinalement adjacents (6, 7), au moyen d'un moulage par injection, puis l'introduction de matériau élastomère (10) entre les segments (6, 7) dans une étape de moulage par injection ultérieure.

## Patentansprüche

1. Zahnbürste mit einem Handgriff mit einem Kopf, der ein Basisende, das dem Handgriff gegenüber liegt, und ein vom Basisende entfernt liegendes Spitzenende aufweist, wobei der Kopf an seinem Basisende an den Handgriff angrenzt, der Kopf und der Handgriff entlang einer Zahnbürstenlängsachse angeordnet sind, der Kopf Borsten aufweist, die sich von einer Borstenfläche des Kopfes aus erstrecken, der Kopf ein im Wesentlichen starres Basissegment aufweist, das an den Zanhbürstenhandgriff angrenzt und sich vom Basisende des Kopfes zu einem Verbindungsbereich erstreckt, der zwischen dem Basisende und dem Spitzenende angeordnet ist, und wobei ein im Wesentlichen starres Spitzensegment sich von dem Spitzenende des Kopfes zum Verbindungsbereich erstreckt, wobei sowohl das Basissegment als auch das Spitzensegment eine Borstenhalterung bilden, wobei das Spitzensegment flexibel und elastisch an der Verbindung mit dem Basissegment verbunden ist, **dadurch gekennzeichnet, daß**:
die Verbindung eine Öffnung (9) zwischen den Spitzen- und Basissegmenten (6, 7) aufweist, die sich über die gesamte Breite des Zahnbürstenkopfs (2) zu den Kantenflächen erstreckt und die die Dicke des Kopfs (2) über die gesamte Länge der Öffnung (9) durchläuft und die an der Borstenfläche (5) und der entgegengesetzten Fläche offen ist und die allein mittels eines Elastomermaterials (10) überbrückt ist, und dass das Basissegment sich über zumindest 60% des Abstandes zwischen dem Basisende des Kopfes und der Kopfspitze erstreckt.

2. Zahnbürste nach Anspruch 1, **dadurch gekennzeichnet, daß** die Öffnung (9) eine gekrümmte oder winklige allgemeine "C"-, "U"- oder "V"-Form in Draufsicht im Blick in allgemein lotrechter Richtung zur Borstenfläche (5) oder entgegengesetzten Fläche hat.

3. Zahnbürste nach Anspruch 1 oder 2, **dadurch gekennzeichnet, daß** die Öffnung (9) an den Kanten des Kopfs (2) schmal ist und sich zur Mitte des Kopfs (2) verbreitert oder umgekehrt.

4. Verfahren zur Herstellung einer Zahnbürste nach einem der Ansprüche 1 bis 3, **gekennzeichnet durch** die folgenden Schritte: zunächst Herstellen der Kunststoffmaterialteile der Zahnbürste mit einem Paar der längs benachbarten Spitzen- und Basissegmente (6, 7) mittels eines Spritzgießverfahrens und danach Einleiten von Elastomermaterial (10) zwischen die Segmente (6, 7) in einem anschließenden Spritzgießschritt.
